## Europäisches Patentamt

## European Patent Office

## Office européen des brevets

(19)

(11) Veröffentlichungsnummer: **0 186 143**

A2

# EUROPÄISCHE PATENTANMELDUNG

(12)

(21) Anmeldenummer: 85116275.0

(22) Anmeldetag: 19.12.85

(51) Int. Cl.⁴: **B 29 C 63/04**

(30) Priorität: 28.12.84 ZA 8410107

(43) Veröffentlichungstag der Anmeldung:
02.07.86 Patentblatt 86/27

(84) Benannte Vertragsstaaten:
AT DE FR GB IT

(71) Anmelder: Heinrich Brandt Maschinenbau GmbH

D-4920 Lemgo(DE)

(72) Erfinder: Henderson, Pieter Martin
10 Beech Road
Bedfordview Transvaal Province(ZA)

(72) Erfinder: Schmitt, Karl-Heinz
122 Pretoria Road Rynfield
Benoni Transvaal Province(ZA)

(74) Vertreter: Hoffmann, Klaus, Dr. rer. nat. et al,
Hoffmann. Eitle & Partner Patentanwälte
Arabellastrasse 4
D-8000 München 81(DE)

(54) Vorrichtung zum Aufbringen von Deckfolienmaterial auf plattenförmige Werkstücke oder dergleichen.

(57) Die Erfindung betrifft eine Vorrichtung, welche einen Haltetisch (2) und eine Klemmvorrichtung (3) zum Halten eines Werkstückes (11) in einer vorgegebenen Lage aufweist. Ein bereits auf der Hauptfläche des Werkstückes aufgebrachtes Deckfolienmaterial wird in dieser Lage über eine Einrichtung an den abgerundeten Kanten des Werkstückes angedrückt. Die Vorrichtung weist einen Drehtisch (12) auf, mit dem das Werkstück in angehobener Stellung relativ zum Haltetisch (2) gehalten und verdreht werden kann, um auf diese Weise aufeinanderfolgende Kanten des Werkstückes der Vorrichtung zuführen zu können, ohne dass dabei das Werkstück aus der Vorrichtung herausgenommen werden muss. Der Drehtisch kann auf einem Träger (13) angebracht sein, der in Richtung der Einrichtung und von dieser weg beweglich ist.

FIG. 2

EP 0 186 143 A2

## Vorrichtung zum Aufbringen von Deckfolienmaterial auf plattenförmige Werkstücke oder dergleichen

Die Erfindung betrifft eine Vorrichtung zum Aufbringen von Deckfolienmaterial auf Trägerflächen und insbesondere auf Hauptflächen von plattenförmigen Werkstücken, wie Türen, Tischplatten oder dergleichen, sowie auf Flächen von andersartigen Gegenständen, bei welchen das Deckfolienmaterial um eine abgerundete Kante verläuft, die sich an die Trägerfäche anschliesst.

Um Deckfolienmaterial in üblicher Weise auf plattenförmige Werkstücke und auf die abgerundeten Kanten derartiger Werkstücke aufzubringen, wird das Deckfolienmaterial zunächst in üblicher Weise auf die flache Hauptfläche aufgebracht. Danach wird das Werkstück in einer Vorrichtung des in der vorliegenden Anmeldung beschriebenen Typs weiterbearbeitet, auf welche die Erfindung gerichtet ist. In dieser Vorrichtung wird das Werkstück festgeklemmt und anschliessend eine Einrichtung zum Andrücken des Deckfolienmaterials an die abgerundeten Kanten des Werkstückes in Betrieb gesetzt. Diese Einrichtung kann eine Andruckleistenanordnung aufweisen, mit der das Deckfolienmaterial um die abgerundete Kante gebogen und gleichzeitig die Verbindung des Deckfolienmaterials mit der Plattenkante bewirkt wird.

In vielen Fällen wird eine derartige Verbindung durch Anwendung von Wärme mittels der Andruckleistenanordnung hergestellt. Eine Vorrichtung dieser Bauart ist in der südafrikanischen Patentanmeldung Nr. 84/3228 vom 1. Mai 1984 beschrieben.

Eine derartige Vorrichtung weist im allgemeinen einen feststehenden, obgleich wahlweise verstellbaren Haltetisch zum Halten der Werkstücke zumindest in ihrem Randbereich auf. Die Werkstücke werden dabei mittels einer Klemmvorrichtung am Haltetisch festgeklemmt, bevor die Andruckleistenanordnung in Betrieb genommen wird. Sind zwei, drei oder mehr Kanten der gleichen Platte mit Deckfolienmaterial in gleicher Weise zu beschichten, so wird das Werkstück nach Beschichtung der ersten Kante aus der Vorrichtung herausgenommen, gedreht und in der neuen Lage wieder in die Vorrichtung eingebracht und dort festgeklemmt, worauf die nächste Beschichtung erfolgen kann. Dieser Vorgang wird solange wiederholt, bis alle Kanten beschichtet sind.

Der Erfindung liegt die Aufgabe zugrunde, eine Vorrichtung dieer Art derart zu verbessern, dass dieser Vorgang und damit die Darbietung der zu behandelnden Kanten in einer derartigen Vorrichtung erheblich vereinfacht wird, insbesondere, wenn eine Anzahl von
Kanten, insbesondere aber nicht ausschliesslich solche, die den gesamten Umfang einer Platte umfassen,
mit Deckfolienmaterial versehen werden sollen, das
sich um die abgerundeten Kanten des Werkstückes erstreckt.

Diese Aufgabe wird erfindungsgemäss gelöst durch eine
Vorrichtung zum Aufbringen von Deckfolienmaterial auf
die Oberfläche von plattenförmigen Werkstücken oder
dergleichen, die gekennzeichnet ist durch einen Haltetisch und eine mit dieser zusammenwirkenden Klemmvorrichtung, eine Einrichtung, um das Deckfolienmaterial an einer abgerundeten Kante des plattenförmigen Werkstückes anzudrücken, das durch den Haltetisch
und die Klemmvorrichtung festgeklemmt ist, einen
Drehtisch zum Halten des festzuklemmenden Werkstückes
in einer Position zwischen dem Haltetisch und der
Klemmvorrichtung und zum Drehen des Werkstückes im
wesentlichen in der Ebene des Werkstückes zwischen
ausgewählten Winkelstellungen, und durch eine Einrichtung, um den Haltetisch und die Klemmvorrichtung
von dem vom Drehtisch gehaltenen Werkstück während
dessen Drehung freizuhalten.

Die Einrichtung, mit der das Deckfolienmaterial an
einer abgerundeten Kante des plattenförmigen Werkstückes angedrückt wird, kann in verschiedener Weise
gestaltet sein. Vorteilhaft ist es, wenn die Einrichtung eine Druckleistenanordnung umfasst.

Bei einem bevorzugten Ausführungsbeispiel ist der Drehtisch auf einem Träger angeordnet, der auf die Druckleistenanordnung zu und von dieser weg beweglich ist. Dadurch wird nicht nur der Beschickungsvorgang, sondern auch das Instellungbringen des Werkstückes nach jedem Drehvorgang vereinfacht.

Grundsätzlich kann der Träger in verschiedenster Weise bewegt werden. Vorteilhaft ist es, hierfür eine Kurbelanordnung vorzusehen, deren Hub verstellbar ist.

Die Einrichtung zum Freihalten des Werkstückes während der Drehbewegung kann in verschiedenster Weise ausgebildet sein. So ist es beispielsweise möglich, den Haltetisch abzusenken. Ein besonders zweckmässiger Aufbau ergibt sich jedoch, wenn die Einrichtung zum Freihalten des Werkstückes während der Drehbewegung eine Hubanordnung umfasst, mit der der Drehtisch vertikal bewegbar ist. Auf diese Weise kann das Werkstück zur Durchführung der Drehbewegung gegenüber dem Haltetisch angehoben werden.

Gemäss einem bevorzugten Ausführungsbeispiel der Erfindung ist der Drehtisch in Richtung der angehobenen Stellung druckbelastet. Diese Druckbelastung kann beispielsweise über eine Feder oder eine pneumatische oder hydraulische Anordnung erfolgen. Durch eine derartige Anordnung wird der Drehtisch automatisch nach Anheben der Klemmvorrichtung ebenfalls angehoben, so dass weitere Steuerungsmittel nicht erforderlich sind. Um das Werkstück nach erfolgter Drehbewegung wieder am Haltetisch festzuklemmen ist es lediglich erforderlich, die Klemmvorrichtung abzusenken, wodurch der Drehtisch entgegen der Druckbelastung nach unten bewegt und das Werkstück wieder mit dem Haltetisch in Kontakt gebracht wird.

Der Drehtisch kann grundsätzlich jede beliebige Form aufweisen. Besonders vorteilhaft ist es jedoch, wenn der Drehtisch tellerförmig ausgebildet ist und eine Saugvorrichtung aufweist, mit welcher das Werkstück während des Drehvorganges auf dem Drehtisch gehalten und fixiert werden kann.

Um eine sichere Fixierung des Werkstückes gegenüber dem Drehtisch zu erzielen, kann es vorteilhaft sein, den Drehtisch mit Einstellstiften auszustatten, die mit zugeordneten Bereichen am Werkstück zusammenwirken.

Grundsätzlich muss der Drehtisch nicht angetrieben sein. Zur Automatisierung des Drehvorganges ist es jedoch vorteilhaft, den Drehtisch über eine Motor- Getriebeanordnung zu drehen.

Gemäss einem bevorzugten Ausführungsbeispiel kann der Haltetisch eine Reihe von abnehmbaren Abstandshaltern aufweisen, die sich über seine gesamte Länge erstrecken. Aufgrund dieser Ausgestaltung kann ein Verschmutzen des Haltetisches durch Leim oder Klebstoff vermieden werden, da es möglich ist, die Abstandselemente an denjenigen Stellen zu entfernen, an denen leim- oder klebstofftragende Kanten des Werkstückes zu liegen kommen.

Zur weiteren Automatisierung kann es zweckmässig sein, an der Vorrichtung Halterungen für eine oder mehrere Leimauftragsvorrichtungen vorzusehen. Diese können auch in Form von Führungsschienen ausgestaltet sein, wodurch die Leimauftragsvorrichtungen durch Hin- und Herbewegung in einstellbare Positionen an der Vorrichtung gebracht werden können.

Gemäss einer weiteren bevorzugten Ausführungsform der Erfindung kann dem Drehtisch eine Markierungsanordnung zugeordnet sein, um den Drehtisch in vorgegebenen Winkelstellungen halten oder stoppen zu können.

Die Erfindung wird anschliessend anhand von Ausführungsbeispielen in Verbindung mit den Zeichnungen beschrieben. Es zeigen:

Fig. 1          eine perspektivische Ansicht der erfindungsgemässen Vorrichtung von einer Seite, an welcher eine Druckleistenanordnung liegt,

Fig. 2          eine teilweise geschnittene Seitenansicht der Vorrichtung,

Fig. 3          eine perspektivische Ansicht der Drehtischanordnung von der Seite der Vorrichtung, die der Druckleistenanordnung gegenüberliegt,

Fig. 4          eine Ansicht der vorderen Stirnseite des Drehtisches und seines Trägers,

Fig. 5        eine isometrische Ansicht einer alternativen Vorrichtung zur Bewegung des Drehtisches und seines Trägers, und

Fig. 6        eine schematische isometrische Ansicht zur Darstellung einiger weiterer Abänderungen der beschriebenen Vorrichtung.

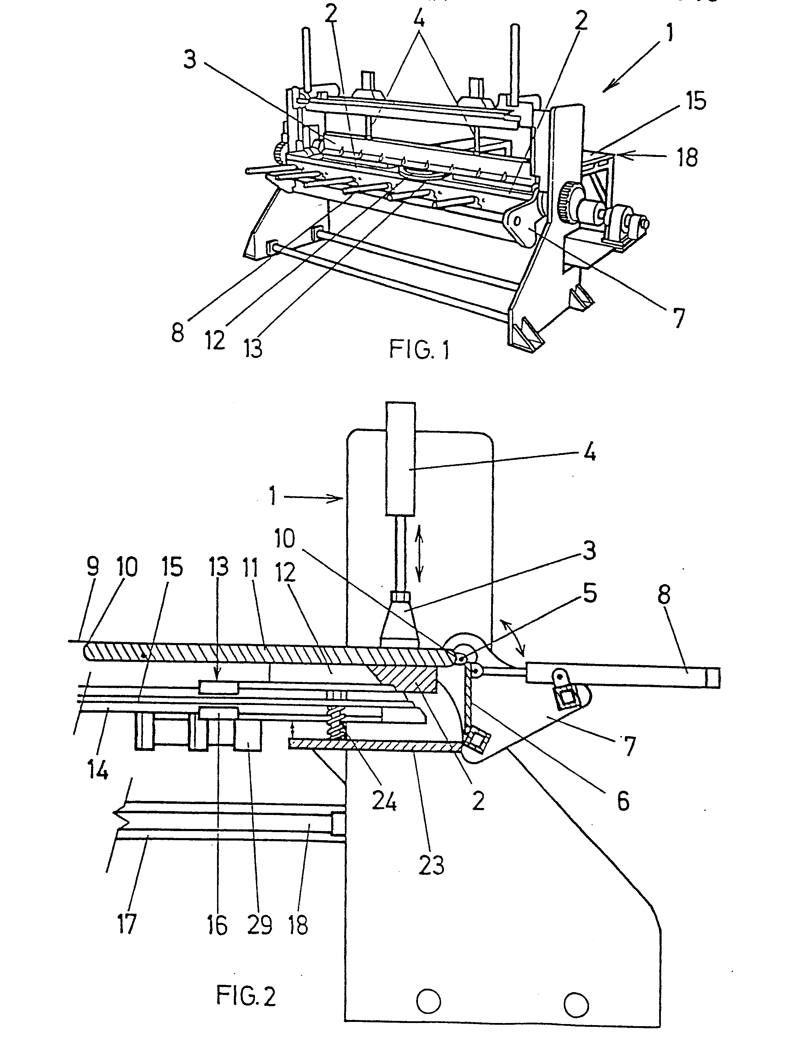

Gemäss einer ersten, in den Fig. 1 bis 4 dargestellten Ausführungsform der Erfindung umfasst die Vorrichtung einen Rahmen 1, der einen Haltetisch 2 trägt und darüber eine Klemmvorrichtung 3, die mittels Pneumatikzylinder 4 betätigbar ist.

Längs einer Kante des Haltetisches 2 ist eine Einrichtung 5 zum Andrücken des Deckfolienmaterials vorgesehen, die eine an Armen 6 befestigte Druckleiste aufweist (siehe Fig. 2), welche von drehbaren Halterungen 7 gehalten werden, so dass die Druckleistenanordnung und die sie tragenden Arme (die schwenkbar an ihren der Druckleistenanordnung abgewandten Enden befestigt sind) mittels Pneumatikzylindern 8 bewegt werden können, um die Druckleistenanordnung in fester Anlage mit dem Deckfolienmaterial 9 zu halten, das auf die abgerundete Kante 10 einer Platte 11 längs der gesamten Länge der Druckleistenanordnung aufgebracht wird. Die Druckleistenanordnung kann beispielsweise durch ein nicht dargestelltes Heizelement erwärmt werden. Nähere Einzelheiten dieser Bauart der Vorrichtung ergeben sich aus der bereits erwähnten südafrikanischen Patentanmeldung Nr. 84/3228.

Ein Drehtisch 12 und ein diesen haltender Träger 13 sind auf Querführungen 14 in einer Richtung beweglich, die im rechten Winkel zur Längsrichtung der Klemmvorrichtung 3 verläuft. An diesen Querführungen 14 ist der Träger 13 zwischen einer inneren Stellung, in welcher er zumindest teilweise unter der Klemmvorrichtung liegt und äusseren Stellungen, in welchen er von dieser entfernt ist, beweglich geführt. Die Führungen sind zweckmässig mit kreisförmigem Querschnitt ausgeführt und haben zu ihrer Halterung nach aussen gerichtete Rahmenelemente 15. Der Träger selbst wird auf den Führungen mit Hilfe von am Träger befestigten Gleitblöcken 16 gehalten.

Der Drehtisch und sein Träger sind längs der Führungen mittels einer Zylinderanordnung 17 beweglich, die durch eine Rahmenanordnung 18 an deren von der Klemmvorrichtung entfernten Ende gehalten wird. Die Bewegung des Trägers wird durch einstellbare Anschläge 19 begrenzt, die auf einem Stab 20 liegen, der zusammen mit dem Träger beweglich ist. Die Anschläge 19 arbeiten mit einem Rahmenelement 21 zusammen, welches am abgewandten Ende der Klemmvorrichtung liegt. Zweckmässigerweise bestehen die Anschläge aus einfachen Schraubenmutteranordnungen und der Stab ist mit einem Gewinde versehen.

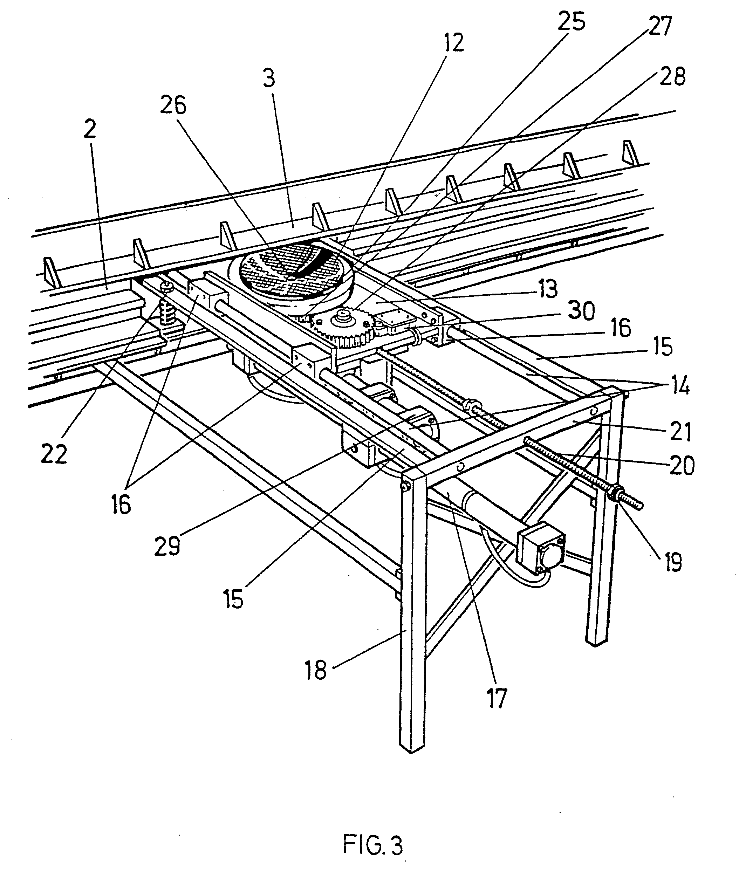

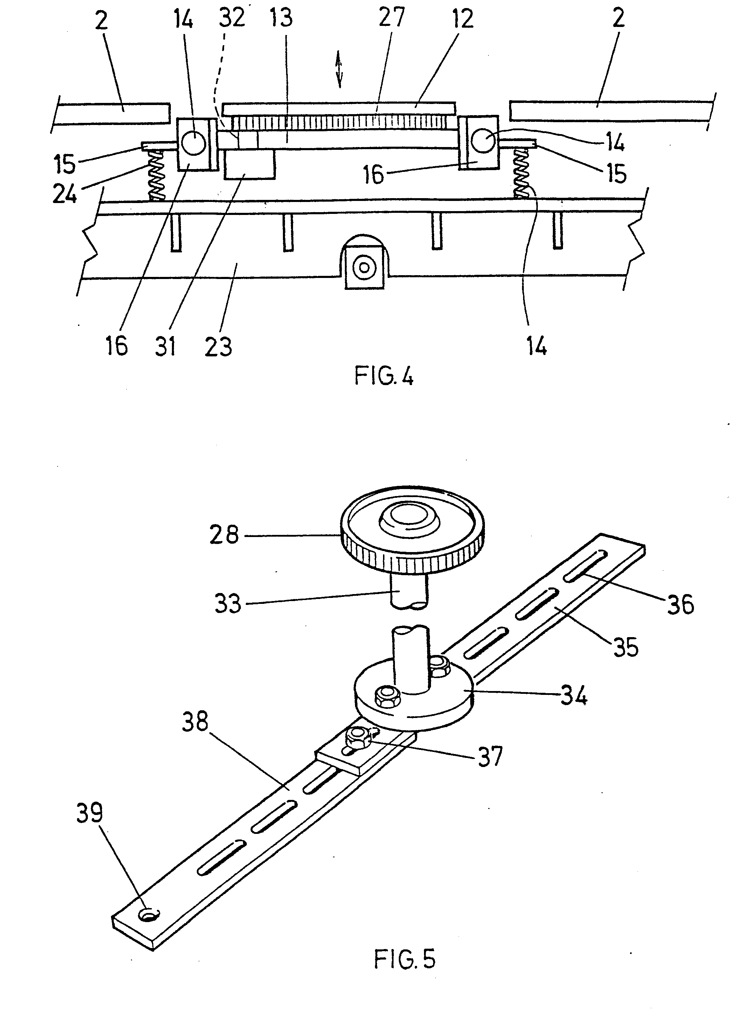

Damit der Drehtisch ein von ihm gehaltenes plattenförmiges Werkstück während des Betriebs anheben kann, so dass es vom Haltetisch freikommt, werden die Enden 22 der nach aussen gerichteten Rahmenelemente 15 durch einen Abschnitt 23 des Hauptrahmens der Vorrichtung mittels Druckfedern 24 gehalten. Die Druckfedern belasten die gesamte Träger- und Führungsanordnung in Richtung der angehobenen Stellung, so dass, wenn die Klemmvorrichtung ausser Anlage mit dem Haltetisch 2 steht, jedes vom Drehtisch gehaltene Werkstück gegenüber dem Haltetisch angehoben wird. Erfolgt das Anklemmen, so wird der Drehtisch selbsttätig nach unten gegen die Belastung durch die Federn gedrückt, so dass das Werkstück fest zwischen dem Haltetisch 2 und der Klemmvorrichtung 3 eingeklemmt wird. Wie ersichtlich, befinden sich der Drehtisch und sein Träger in einem Zwischenraum in der Längsmitte des Haltetisches, was am klarsten aus Fig. 3 und 4 hervorgeht.

Ferner weist der Drehtisch vorzugsweise eine Kreisform auf und trägt an seinem Umfang einen Dichtungsring 25, wobei eine tellerförmige Ausbildung vorgesehen ist, so dass die zentrale Öffnung für die Anwendung eines Unterdrucks eingesetzt werden kann, um ein Werkstück mittels des Unterdrucks nach Wunsch am Drehtisch festzuhalten.

Zur Erzielung einer Drehung des Drehtisches 12 ist unmittelbar unterhalb desselben ein konzentrisches Zahnrad 27 vorgesehen, welches in Eingriff mit einem Antriebszahnrad 28 steht, das ebenfalls am Träger angeordnet und durch eine Pneumatik-Motor-Getriebeanordnung 29 angetrieben wird. Dabei ist das Übersetzungsverhältnis derart, dass das Antriebszahnrad 28 sich für jede 180°-Drehung des Drehtisches einmal umdreht. In den meisten Fällen werden rechteckige oder quadratische Werkstücke in Form von Platten mit Deckfolienmaterial beschichtet und entsprechend muss die Platte jeweils um 90° gedreht werden, wenn alle Kanten durch die Druckleistenanordnung erfasst werden sollen. Eine Mikroschalteranordnung 30 arbeitet mit dem Antriebszahnrad 28 zusammen, um jede 180°-Drehung desselben zu erfassen, was einer 90°-Drehung des Drehtisches entspricht. Die Mikroschalteranordnung ist derart angeschlossen, dass sie eine in Fig. 4 dargestellte Pneumatik-Zylinderanordnung 31 betätigt, die einen gestrichelt dargestellten Verriegelungsstift 32 in mit diesem zusammenwirkende Öffnungen im konzentrischen Zahnrad 27 drückt, um sicherzustellen, dass der Drehtisch genau über den erforderlichen Winkelbereich von 90° gedreht wird, womit eine Markie-rungsanordnung gebildet wird. Die Mikroschalteranord-nung betätigt den Pneumatikzylinder 31 zusammen mit dessen Verriegelungsstift, kurz bevor die volle 180°-Drehung des Zahnrads ausgeführt wurde und der Verriegelungsstift wird entsprechend derart gegen das Zahnrad 27 gedrückt, dass dieses genau in der richtigen Stellung durch den Verriegelungsstift gestoppt wird, der mit der benötigten Öffnung in die richtige Stellung einschnappt.

Es ist offensichtlich, dass eine Platte mühelos am Drehtisch derart angeordnet werden kann, dass eine Plattenkante in gewünschter Lage für das Aufbringen von Deckfolienmaterial um eine abgerundete Plattenkante liegt. (Das Deckfolienmaterial ist dabei in üblicher Weise - wie eingangs beschrieben - bereits auf die Hauptfläche der Platte aufgepresst worden) Sobald man die Saugwirkung eingesetzt hat, welche die Platte auf dem Drehtisch hält, kann die erste Kante mittels der Druckleistenanordnung behandelt werden.

Wird die Klemmvorrichtung freigegeben, so wird die Platte infolge der Einwirkung der Druckfedern 24 angehoben und die Pneumatik-Motor-Getriebeanordnung 29 wird selbsttätig betätigt und der Drehtisch verdreht. Falls erforderlich, wird die Kolbenanordnung 17, die ebenfalls als Pneumatikanordnung ausgebildet ist und die die Bewegung des Trägers steuert, betätigt und die Bewegung des Trägers wird durch das Eingreifen der Anschläge 19 am Rahmenelement 21 angehalten, durch welche der die Anschläge tragende Stab 20 hindurchtritt. Durch das Einschalten der Pneumatik-Motor-Getiebeanordnung 29 dreht das Antriebszahnrad über einen Bereich von 180° und die Einschaltung der Mikroschalteranordnung 30 gewährleistet, dass der Verriegelungsstift in die richtige Öffnung eingreift, nachdem das Zahnrad 27 über den erforderlichen Drehwinkel gedreht wurde.

Es ist ersichtlich, dass das Eingreifen der am Stab 20 befindlichen Anschläge 19 mit dem Rahmenelement 21 eine Knarrwirkung verursachen kann, falls die Anschläge nicht entsprechend gedämpft sind, jedoch liegt anstelle einer Dämpfung eine alternative Ausbildung innerhalb des Rahmens der Erfindung.

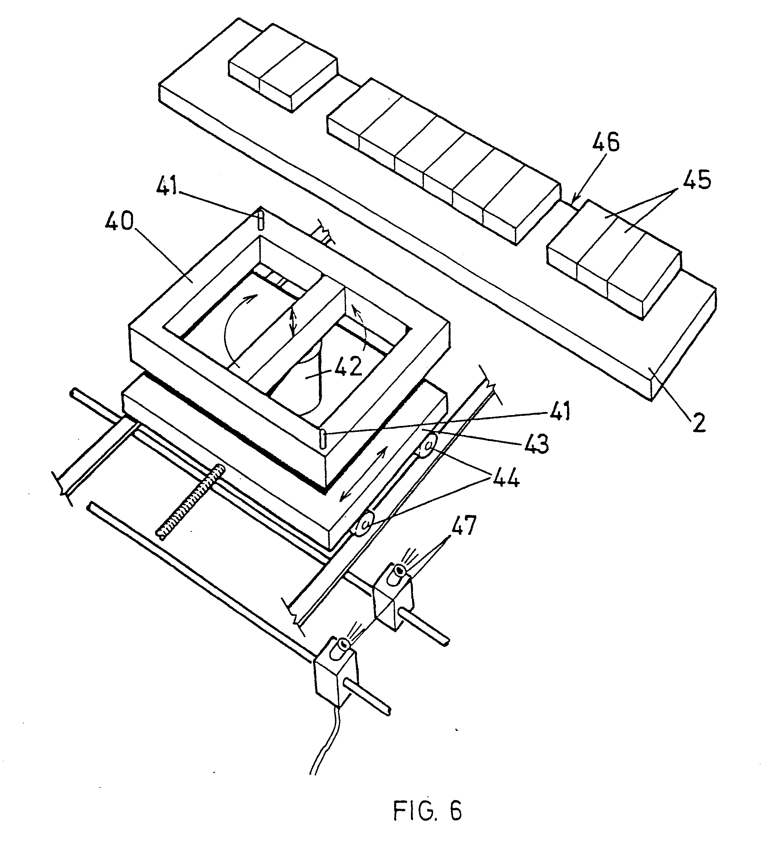

Gemäss Fig. 5 ist das Antriebszahnrad 28 gemeinsam mit einer Antriebswelle 33 und einer Platte 34 drehbar. Die Platte 34 ist mit einer in Längsrichtung einstellbaren Kurbelstange 35 verschraubt, die an ihrem freien Ende 36 gelenkig mit dem Rahmen der Vorrichtung verbunden ist und an welcher mittels eines Schwenkzapfens 37 einstellbar eine weitere Kurbelstange 38 schwenkbar verbunden ist, die mit ihrem anderen Ende 39 am Träger befestigt ist. Durch geeignete Einstellung der Lage der Zapfen und der Verbindungsstellung der ersten Kurbelstange 35 an der Platte 34 kann die genaue Bewegungsstrecke des Trägers für jegliche rechteckige Platten eingestellt werden, die in der Vorrichtung behandelt werden sollen. Somit wird eine Drehung des Antriebszahnrads 28 selbsttätig die Stellung des Drehtisches zur Positionierung der entsprechenden Plattenkante zum Auftrag des Deckfolienmaterials an dieser einstellen.

Viele andere Abänderungen der Erfindung können im Rahmen derselben erfolgen und einige hiervon sind in Fig. 6 angegeben.

So kann der Drehtisch beispielsweise aus einem einfachen rechteckigen Rahmen 40 bestehen und in vorgegebenen Stellungen einfache Stifte 41 zur Positionierung von Werkstücken aufweisen. Das Anheben des Drehtisches kann mittels einer Pneumatik- oder Hydraulik-Zylinderanordnung 42 erfolgen, die sich zwischen dem Drehtisch und einem Träger 43 für diesen erstreckt und der Träger 43 kann auf Rollen oder anderen Radanordnungen 44 angebracht sein.

Die zum Auftrag auf eine Platte bestimmten Klebstoffe, die den Auftrag von Deckfolienmaterial auf das Werkstück ermöglichen sollen, sind zweckmässigerweise im wesentlichen trocken und kleben deshalb nicht am Haltetisch und an der Klemmvorrichtung. Werden jedoch Klebstoffe verwendet, die diesbezüglich problematisch sind, so ist es vorteilhaft, eine Reihe von Abstandselementen, vorzugsweise in Form von Halteblöcken vorzusehen, die die obere wirksame Oberfläche des Haltetisches 2 bilden und - wie bei 64 angedeutet - einfach weggenommen werden können, wo beim Betrieb der Vorrichtung Leimbereiche auf das Werkstück aufgetragen werden sollen. Ferner wird im Rahmen der Erfindung in Betracht gezogen, dass Leim-Spülvorrichtungen 47 in der Vorrichtung vorgesehen werden, um selbsttätig Klebstoff auf die erforderlichen Bereiche aufzutragen.

Bei Werkstücken in Form von rechteckigen oder quadratischen Platten kann das Deckfolienmaterial an allen vier Kanten aufgetragen werden, um beispielsweise eine Schreibtischplatte oder eine Tischplatte zu bilden. Zu diesem Zweck muss das Deckfolienmaterial an seinen Ecken gemäss einem richtigen Muster beschnitten sein, welches der Abwicklung der Verbindungslinie benachbarter gerundeter Kanten entspricht. Zwar können die Kanten im unbearbeiteten Zustand verbleiben, jedoch können sie auch ausgeschnitten sein und vorgeformte oder vorgefertigte Einsätze enthalten, damit die Ecken ein glatteres Aussehen aufweisen. Die durch die Erfindung angegebene Weiterbildung der Vorrichtung ist äusserst vorteilhaft und erbringt erhebliche Einsparungen bezüglich der Zeit, die im allgemeinen bei der Handhabung von Platten zwischen den verschiedenen Arbeitsgängen benötigt wird, in denen die verschiedenen Plattenkanten der Vorrichtung für den Auftrag des Deckfolienmaterials zugeführt werden.

PATENTANSPRÜCHE

1. Vorrichtung zum Aufbringen von Deckfolienmaterial auf die Oberfläche von plattenförmigen Werkstücken oder dergleichen, g e k e n n z e i c h - n e t durch einen Haltetisch (2) und eine mit diesem zusammenwirkende Klemmvorrichtung (3), eine Einrichtung (5), um das Deckfolienmaterial an einer abgerundeten Kante des plattenförmigen Werkstückes (11) anzudrücken, das durch den Haltetisch und die Klemmvorrichtung festgeklemmt ist, einen Drehtisch (12) zum Halten des festzuklemmenden Werkstückes (11) in einer Position zwischen dem Haltetisch und der Klemmvorrichtung und zum Drehen des Werkstückes im wesentlichen in der Ebene des Werkstückes zwischen ausgewählten Winkelstellungen, und durch eine Einrichtung, um den Haltetisch (2) und die Klemmvorrichtung (3) von dem vom Drehtisch gehaltenen Werkstück während dessen Drehung freizuhalten.

2. Vorrichtung nach Anspruch 1, dadurch g e - k e n n z e i c h n e t , dass die zum Andrücken vorgesehene Einrichtung (5) eine Druckleistenanordnung umfasst.

3. Vorrichtung nach Anspruch 2, dadurch g e - k e n n z e i c h n e t , dass der Drehtisch (12) auf einem Träger (13) angeordnet ist, der auf die Druckleistenanordnung (5) zu und von dieser weg beweglich ist.

4. Vorrichtung nach Anspruch 3, dadurch g e - k e n n z e i c h n e t , dass der Träger (13) über eine Kurbelanordnung bewegbar ist, deren Hub verstellbar ist.

5. Vorrichtung nach Anspruch 1, dadurch g e - k e n n z e i c h n e t , dass die Einrichtung zum Freihalten des Werkstückes (11) während der Drehbewegung eine Hubanordnung umfasst, mit der der Drehtisch (12) vertikal beweglich ist.

6. Vorrichtung nach Anspruch 5, dadurch g e - k e n n z e i c h n e t , dass der Drehtisch (12) in Richtung der angehobenen Stellung, in welcher sich das von ihm gehaltene Werkstück im Abstand zum Haltetisch (2) befindet, druckbelastet ist, und dass die Klemmvorrichtung (3) betätigbar ist, um den Drehtisch gegen die Druckbelastung zu bewegen, um das vom Drehtisch gehaltene Werkstück (11) am Haltetisch (2) festzuklemmen.

7. Vorrichtung nach Anspruch 1, dadurch g e - k e n n z e i c h n e t , dass der Drehtisch (12) tellerförmig ausgebildet ist und eine Saugvorrichtung (26) aufweist, um das Werkstück (11) auf dem Drehtisch (12) zu halten.

8. Vorrichtung nach Anspruch 1, dadurch g e - k e n n z e i c h n e t , dass der Drehtisch (12) Einstellstifte aufweist, die mit zugeordneten Bereichen am Werkstück (11) zusammenwirken.

9. Vorrichtung nach Anspruch 1, dadurch g e -
k e n n z e i c h n e t , dass der Drehtisch
(12) über eine Motor-Getriebeanordnung (29) drehbar ist.

10. Vorrichtung nach Anspruch 1, g e k e n n -
z e i c h n e t durch eine Markierungsanordnung
(32), um den Drehtisch (12) in den erforderlichen
Winkelstellungen zu halten oder zu stoppen.

11. Vorrichtung nach Anspruch 1, dadurch g e -
k e n n z e i c h n e t , dass der Haltetisch
eine Anzahl von abnehmbaren Abstandselementen
aufweist, auf deren Oberseite das Werkstück aufliegt.

0186143

1/4

FIG. 1

FIG. 2

FIG. 3

FIG. 4

FIG. 5

FIG. 6